# EUROPÄISCHE PATENTSCHRIFT

(11) **EP 3 161 308 B1**
(45) Veröffentlichungstag und Bekanntmachung des Hinweises auf die Patenterteilung: **24.11.2021**
(21) Anmeldenummer: 15751068.6
(22) Anmeldetag: 29.06.2015
(51) Int. Cl.: F03D 5/00, B64C 31/06

(54) **SYSTEM ZUM STARTEN UND LANDEN EINER FLUGFÄHIGEN FLÜGELKONSTRUKTION**
SYSTEM FOR STARTING AND LANDING A FLIGHT-CAPABLE WING CONSTRUCTION
SYSTÈME DE LANCEMENT ET D'ATTERRISSAGE D'UNE STRUCTURE D'AILE APTE AU VOL

(30) Priorität: 27.06.2014 DE 102014109099
(43) Veröffentlichungstag der Anmeldung: 03.05.2017
(73) Patentinhaber: EnerKite GmbH, 14532 Kleinmachnow (DE)
(72) Erfinder: KÖVESDI, Peter, 10969 Berlin (DE); GEBHARDT, Christian, 10405 Berlin (DE)
(74) Vertreter: Benz, Jürgen
(86) Internationale Anmeldenummer: PCT/IB2015/001242
(87) Internationale Veröffentlichungsnummer: WO 2015/198141

(56) Entgegenhaltungen:
- EP-A2- 1 905 687
- WO-A2-2010/020263
- NL-C- 2 008 549
- None

## Beschreibung

### GEBIET DER ERFINDUNG

Die vorliegende Erfindung betrifft den Bereich der erneuerbaren Energien. Insbesondere betrifft die vorliegende Erfindung die Erzeugung von Energie aus Windkraft mittels einer flugfähigen durch Windkraft angetriebenen Flügelkonstruktion.

### HINTERGRUND

Im Bereich der erneuerbaren Energien sind Anlagen bekannt, die Windenergie mittels einer an einen Generator gekoppelten flugfähigen Flügelkonstruktion in elektrische Energie umwandeln. So wird in der EP 1 905 687 A2 ein lenkbarer Drachen zur Bereitstellung von

### Antriebskraft für ein Fahrzeug beschrieben.

Beim Betrieb solcher Anlagen gibt es jedoch bisher ungelöste Herausforderungen beim Starten und Landen der Flügelkonstruktion.

### ZUSAMMENFASSUNG

Die vorliegende Erfindung offenbart eine flugfähige durch Wind antreibbare Flügelkonstruktion und ein System zur Nachführung einer Seilklinkenbetätigungsvorrichtung für die flugfähige durch Wind antreibbare Flügelkonstruktion, welche ein sicheres Starten und Landen der flugfähigen durch Wind antreibbaren Flügelkonstruktion ermöglicht. Ferner offenbart die vorliegende Erfindung eine diese Vorrichtungen umfassende Windkraftanlage.

Die erfindungsgemäße Flügelkonstruktion umfasst eine Halteleine, welche dazu eingerichtet ist, die Flügelkonstruktion im Betrieb mit einer Bodenstation zu verbinden, wobei ein Ende der Halteleine an der Flügelkonstruktion befestigt ist. Unter dem Begriff "Halteleine" soll im Sinne der vorliegenden Erfindung generell jegliche Art von Seil fallen, welches dazu eingerichtet ist, im Betrieb die Flügelkonstruktion mit der Bodenstation zu verbinden. "Im Betrieb" bedeutet hier insbesondere, dass die Flügelkonstruktion sich in der Luft bewegt bzw. durch die Halteleine in der Luft gehalten wird, wobei die Luft gegen die Flügelkonstruktion strömt und die Halteleine die Bewegung der Flügelkonstruktion in der Luft zumindest teilweise vorgibt bzw. begrenzt.

Dazu eingerichtet im Betrieb die Flügelkonstruktion mit der Bodenstation zu verbinden sind insbesondere Seile, die eine vorbestimmte Elastizität und Bruchfestigkeit aufweisen. Unter den Begriff "Halteleine" soll im Sinne der vorliegenden Erfindung zudem nicht nur ein durchgängiges, d. h. einstückig ausgebildetes Seil fallen, welches die Flügelkonstruktion mit der Bodenstation verbindet, sondern auch eine aus mehreren Seilabschnitten bestehende Halteleine, die beispielsweise über Verbindungselemente miteinander verbunden sind. Solche Verbindungselemente können Strukturen umfassen, an denen die Seilabschnitte befestigt sind. Die Strukturen können reib- und stoffschlüssig sein, wie Vergüsse oder reib- und formschlüssig sein, wie Spleiß-, Press-, Keil- oder Schraubverbindungen.

Die erfindungsgemäße Flügelkonstruktion umfasst ferner ein Waagleinensystem. Das Waagleinensystem umfasst eine Vielzahl von Waagleinen, wobei zumindest zwei Waagleinen ein Ende aufweisen, welches mit der Flügelkonstruktion verbunden ist und zumindest eine Waagleine ein Ende aufweist, welches mit der Halteleine verbunden ist. Als "Waagleine" im Sinne der vorliegenden Erfindung kommen, wie bereits in Bezug auf die Halteleine ausgeführt, jegliche Seile oder mittels Verbindungselemente verbundene Seilabschnitte in Betracht, welche eine vorbestimmte Elastizität und Bruchfestigkeit aufweisen. Die Waagleinen reduzieren die Anforderungen an die Stabilität der Flügelkonstruktion, indem sie die Haltekraft der Halteleine über die Flügelkonstruktion verteilen.

Die erfindungsgemäße Flügelkonstruktion ist dadurch gekennzeichnet, dass das Waagleinensystem im Betrieb lösbar auf die Halteleine aufgekoppelt ist. "Lösbar" bedeutet im Sinne der vorliegenden Erfindung insbesondere, dass das zumindest eine, mit der Halteleine verbundene Ende des Waagleinensystems so mit der Halteleine verbunden ist, dass diese Verbindung durch einen vorbestimmten Mechanismus, planvoll gelöst werden kann. Ist das zumindest eine mit der Halteleine verbundene Ende des Waagleinensystems von der Halteleine gelöst, d. h. abgekoppelt, wird keine Kraft mehr von dem Waagleinensystem in die Halteleine eingeleitet und das zumindest eine abgekoppelte Ende des Waagleinensystems ist relativ zu dem Abschnitt der Halteleine, mit dem es verbunden war, bewegbar.

Dies ist insbesondere deshalb vorteilhaft, weil dadurch ermöglicht wird, beim Landen der Flügelkonstruktion, diese durch Einrollen der Halteleine in eine Fangvorrichtung zu ziehen, ohne das Waagleinensystem berücksichtigen zu müssen. Würde man das Waagleinensystem nicht von der Halteleine abkoppeln, stünde man vor dem Problem, dass man die Halteleine nur bis zur Verbindungsstelle zwischen Halteleine und Waagleinen auf einer Trommel aufwickeln könnte, da ansonsten die Spannung auf den Waagleinen zu groß würde. Andererseits müsste eine Fangvorrichtung, die die Flügelkonstruktion bereits dann fängt, wenn sich die Verbindungsstelle zwischen Halteleine und Waageleinensystem der Trommel nähert, entsprechend lang sein, um die Distanz zwischen Verbindungsstelle und Flügelkonstruktion zu überbrücken oder entsprechend groß, um Platz für das Waagleinensystem bereitzustellen, was mit erheblichem konstruktiven Mehraufwand verbunden ist. Diese Nachteile überwindet die vorliegende Erfindung, indem die Verbindung zwischen Halteleine und Waagleinensystem lösbar ausgestaltet ist, so dass auch der zwischen Verbindungsstelle und Flügelkonstruktion befindliche Abschnitt der Halteleine, im Folgenden als "Fangseil" bezeichnet, auf die Trommel aufgewickelt werden kann.

Gemäß der Erfindung weist die Halteleine eine an der Halteleine befestigte erste Hülse auf. Zudem weist das Waagleinensystem erfindungsgemäß eine zweite Hülse auf, mit der die zumindest eine Waagleine verbunden ist. Im Betrieb ist das Fangseil durch die zweite Hülse geführt und die erste und die zweite Hülse sind dazu eingerichtet, eine lösbare form- oder kraftschlüssige Verbindung einzugehen. Wenn die erste und zweite Hülse eine form- oder kraftschlüssige Verbindung eingegangen sind, ist das Waagleinensystem fest mit der Halteleine verbunden, so dass Zugkräfte über das Waagleinensystem in die Halteleine eingeleitet werden können. Sind die erste und die zweite Hülse voneinander abgekoppelt, kann das Fangseil durch die zweite Hülse laufen, so dass beim Aufwickeln der Halteleine das Waagleinensystem nicht auf der Trommel aufgewickelt werden muss. Das Abkoppeln der Hülsen voneinander ist revidierbar, d. h. die abgekoppelten Hülsen sind dazu eingerichtet, durch einen vorbestimmten Mechanismus wieder eine form- oder kraftschlüssige Verbindung miteinander einzugehen. Vorzugsweise weist die zweite Hülse zumindest einen Klemmkörper auf. Der Klemmkörper greift, wenn er sich in einer ersten Position befindet, in eine Aussparung in der ersten Hülse ein. Vorzugsweise umfasst die zweite Hülse zudem eine lösbare Verriegelung, welche dazu eingerichtet ist, in einem ersten Zustand den zumindest einen Klemmkörper in der ersten Position zu fixieren und in einem zweiten Zustand die Bewegung des zumindest einen Klemmkörpers in eine zweite Position zu ermöglichen, in welcher der zumindest eine Klemmkörper in die Aussparung der ersten Hülse nicht eingreift.

Vorzugsweise ist die zumindest eine Waagleine mit einem an der zweiten Hülse angelenkten Element verbunden. Das angelenkte Element ermöglicht es, dass die Waagleinen beim Fangen der Flügelkonstruktion von dem Bereich, durch den das Fangseil läuft, weggeklappt werden, so dass das weitere Aufrollen des Fangseils nicht gestört wird.

Die erfindungsgemäße Windkraftanlage umfasst die oben beschriebene flugfähige durch Wind antreibbare Flügelkonstruktion und eine Bodenstation, mit der die Flügelkonstruktion durch die Halteleine verbunden ist. Die Windkraftanlage weist ferner eine Seilklinkenbetätigungsvorrichtung auf, durch die im Betrieb die Halteleine geführt ist und welche dazu eingerichtet ist, die Verriegelung der zweiten Hülse zu lösen, wenn die zweite Hülse eine vorbestimmte Position relativ zur Seilklinkenbetätigungsvorrichtung einnimmt.

Wird die Halteleine durch die Seilklinkenbetätigungsvorrichtung geführt, wird die zweite Hülse in die Seilklinkenbetätigungsvorrichtung gezogen, wobei die Seilklinkenbetätigungsvorrichtung so ausgestaltet ist, dass beim Hereinziehen der zweiten Hülse in die Seilklinkenbetätigungsvorrichtung die Verriegelung der zweiten Hülse gelöst wird. Durch das Lösen der Verriegelung verbleibt die zweite Hülse in der Seilklinkenbetätigungsvorrichtung, während die erste Hülse aus der zweiten Hülse herausgezogen wird, wodurch ein Einziehen des Fangseils ermöglicht wird.

Vorzugsweise wird ein Verriegelungselement der zweiten Hülse, welches in dem ersten Zustand den zumindest einen Klemmkörper in der ersten Position fixiert, beim Hereinziehen der zweiten Hülse in die Seilklinkenbetätigungsvorrichtung, vorzugsweise gegen die Kraft eines elastischen Elements, von einer ersten Lage in eine zweite Lage bewegt, wodurch die Bewegung des zumindest einen Klemmkörpers in die zweite Position ermöglicht wird. Ist der Klemmkörper in der zweiten Position, sind die erste und zweite Hülse voneinander entkoppelt, wodurch die erste Hülse aus der zweiten Hülse herausgezogen werden kann, während die zweite Hülse in der Seilklinkenbetätigungsvorrichtung verbleibt.

Vorzugsweise ist die Seilklinkenbetätigungsvorrichtung in eine Fangvorrichtung integriert, die zumindest eine drehbar gelagerte Fangklinke aufweist. Vorzugsweise weist die Flügelkonstruktion eine Fangeinrichtung mit zumindest einer Aussparung auf und die zumindest eine Fangklinke und die zumindest eine Aussparung sind so ausgeformt, dass, wenn ein Vorsprung der zumindest einen Fangklinke in die zumindest eine Aussparung eingreift, die Flügelkonstruktion an der Fangvorrichtung lösbar befestigt ist. Vorzugsweise ist das Fangseil an der Fangeinrichtung befestigt, so dass beim Einziehen des Fangseils die Fangeinrichtung auf die Fangvorrichtung aufgeschoben wird, bis die zumindest eine Fangklinke einrastet.

Vorzugsweise wird die Aussparung in der Fangeinrichtung, in die der Vorsprung der zumindest einen Fangklinke eingreift, durch einen an einem Fangtrichter befestigten Fangring gebildet. Der Fangtrichter weist vorzugsweise eine kegelförmige Aussparung auf, deren dem Fangring zugewandte Öffnung größer ist als der Innendurchmesser des Fangrings. Somit bildet die innere Kante des Fangrings zusammen mit dem Fangtrichter, der ringseitig einen größeren Innendurchmesser aufweist als der Fangring, eine Aussparung in der Fangeinrichtung, in die der Vorsprung eingreifen kann, d. h. der Vorsprung der zumindest einen Fangklinke liegt im eingerasteten Zustand am Fangring an.

Vorzugsweise erstreckt sich ein Bereich des Fangrings in die kegelförmige Aussparung und der in die Aussparung eingreifende Vorsprung der zumindest einen Fangklinke ist so geformt, dass er, wenn die Flügelkonstruktion an der Fangvorrichtung lösbar befestigt ist, eine dem Fangring zugewandte Oberfläche aufweist, die parallel zu dem Bereich des Fangrings verläuft, der sich in die kegelförmige Aussparung erstreckt. Zusammen mit einer entsprechend gewählten Lagerachse der zumindest einen Fangklinke, bei der die resultierende Kraft aus Normal- und Tangentialkraft (aus Reibung) von jedem beliebigen Punkt der Oberfläche auf die Lagerachse oder innen, das heißt in Richtung des Zentrums der Fangvorrichtung, an ihr vorbei gerichtet ist, ist die Verbindung zwischen Fangvorrichtung und Fangeinrichtung selbsthaltend.

Vorzugsweise weist die kegelförmige Aussparung einen Innenbereich auf, der bei Bewegung der kegelförmigen Aussparung in Halteleinenrichtung den Vorsprung der zumindest einen Fangklinke radial nach innen bzw. in Richtung aufs Zentrum der kegelförmigen Aussparung drückt. Durch Heranziehen der Fangeinrichtung kann somit die zumindest eine Fangklinke aus ihrem Eingriff in die zumindest eine Aussparung gelöst werden. Dies ist insbesondere deshalb vorteilhaft, weil dadurch die Fangklinke nicht durch einen mit der zumindest einen Fangklinke in Verbindung stehenden Aktuator aufgedrückt werden muss, sondern der Aktuator nur noch dazu eingerichtet sein muss, die zumindest eine Fangklinke in ihrer offenen Stellung zu halten, so dass die Anforderungen an den Aktuator reduziert werden können.

In einer anderen vorteilhaften Ausprägung ist die Seilklinkenbetätigungsvorrichtung in eine Fangvorrichtung integriert, die anstatt einer Fangklinke, die in eine Aussparung an der Flügelkonstruktion eingreift, einen oder mehrere Greifer aufweist, die in Form und Ausmaß geeignet sind, den Flügel in Hoch- oder Längsrichtung von außen ganz oder teilweise zu umschließen. Vorzugsweise weisen diese Greifer jeweils mindestens zwei gegeneinander gelenkig gelagerte Schenkel auf. Die Greifer sind so ausgestaltet, dass sie beim Eintreffen der Flügelkonstruktion selbsttätig diese umschließen. Hierzu kann an jedem Greifer jeweils ein oder mehrere Fanggurte vorgesehen sein, mittels dessen die Kräfte der eintreffenden Flügelkonstruktion in die Schenkel der Greifer geleitet werden, wodurch diese sich schließen und damit die Flügelkonstruktion an der Fangvorrichtung lösbar befestigten. Die Schenkel der Greifer können mit einer in Öffnungsrichtung wirkenden Feder belastet sein, die dafür sorgt, dass beim Verlassen des Greifers durch die Flügelkonstruktion sich dieser aufgrund der fehlenden Kraft im Fanggurt wieder öffnet. Alternativ oder zusätzlich zur Betätigung mittels Feder und Gurt kann der Greifer auch durch einen oder mehrere Antriebe geöffnet und geschlossen werden.

Vorzugsweise weisen die mehreren Greifer jeweils mindestens zwei an einer Basis eines Greifers angelenkte Schenkel auf. Vorzugsweise sind jeweils mindestens zwei Schenkel eines Greifers an ihrem freien Ende mit einem Fanggurt verbunden, der dazu eingerichtet ist, von einer eintreffenden Flügelkonstruktion gespannt zu werden und die freien Enden der Schenkel aufeinander zu zu bewegen. Vorzugsweise weist der eine oder die mehreren Greifer jeweils ein oder mehrere rückstellelastische Elemente auf, die dazu eingerichtet sind, zumindest einen Schenkel mit einem Drehmoment zu beaufschlagen.

Vorzugsweise weisen der eine oder die mehreren Greifer jeweils zumindest einen Antrieb auf, der dazu eingerichtet ist, zumindest einen Schenkel mit einem Drehmoment zu beaufschlagen. Vorzugsweise weist zumindest ein Schenkel zumindest eines Greifers zumindest einen Vorsprung und die Flügelkonstruktion zumindest eine entsprechende Aussparung auf und der Vorsprung greift in die Aussparung ein, wenn die Flügelkonstruktion vom Greifer gehalten wird. Vorzugsweise weist der eine oder die mehreren Greifer jeweils an einem Oberflächenbereich zumindest eines Schenkels ein elastisches, nachgiebiges Material auf.

Vorzugsweise weisen die Schenkel der Greifer an der Innenseite Elemente auf, die im geschlossenen Zustand den (teil-)umschlossenen Flügel über eine große Fläche berühren. Zu diesem Zwecke können die Elemente der Flügelform eng nachgebildet sein und/oder aus weichem, anschmiegsamem Material bestehen.

Vorzugsweise können der oder die Greifer neben dem unten beschriebenen Nachführungssystem der Fangeinrichtung zusätzlich um eine dritte Achse, die nicht parallel zur ersten oder zweiten liegt, angetrieben gedreht werden. Auf diese Weise können sie noch besser auf einen ankommenden Flügel ausgerichtet werden.

In einer weiteren vorteilhaften Ausprägung umfasst die Fangvorrichtung ein Auflageelement mit einer plastischen Auflagefläche (im Weiteren als Fangkissen bezeichnet), welches aus einer flexiblen Hülle und einer schütt- oder fließfähigen Füllung besteht. Die Füllung kann aus Fluid (beispielsweise Luft, Wasser, Öl) oder Granulat (beispielsweise Pulver, Puder, Sand, Körner, EPS-Perlen) oder Mischungen aus solchen Stoffen bestehen.

Hierdurch kann das Fangkissen durch die eintreffende Flügelkonstruktion plastisch verformt werden, so dass Flügel und Fangeinrichtung eine lösbare, im Wesentlichen formschlüssige Verbindung eingehen. Durch Zug an der Halteleine kann die Flügelkonstruktion in das Fangkissen hineingezogen und damit am Fangkissen arretiert werden.

In einer vorteilhaften Ausprägung wird das Halteseil durch eine Aussparung im Fangkissen hindurch geführt.

In einer vorteilhaften Ausprägung wird das Fangkissen mit einer oder mehreren Öffnungen zur Umgebung versehen, durch welche Umgebungsluft, nicht jedoch etwaiges anderes Füllmaterial/-fluid hindurchtreten kann. Diese Öffnung(en) sind in Anzahl und Größe so zu wählen, dass die Verformung des Fangkissens nur mit der gewünschten Dämpfung ermöglicht wird. Dadurch können das Bremsverhalten des Flügels ab der Berührung mit dem Fangkissen eingestellt und so die Beschleunigungskräfte auf die Flügelkonstruktion gesteuert werden. In einer weiteren vorteilhafter Ausprägung werden im Fangkissen elastische Elemente vorgesehen, die bei Abwesenheit der Flügelkonstruktion das Kissenvolumen vergrößern und die Umgebungsluft für den nächsten Landevorgang wieder einsaugen.

In weiteren vorteilhaften Ausprägungen wird das Fangkissen zum Zweck der Steuerung der Beschleunigungskräfte auf die Flügelkonstruktion in mehrere Kammern unterteilt, die mit derart gestalteten Verbindungslöchern oder -kanälen verbunden sind, dass die Kissenfüllung zwischen den Kammern gedrosselt strömen kann. Die Öffnungen/Kanäle zwischen den Kammern sind in Größe und ggf. Länge so zu wählen, dass die Verformung des Fangkissens nur mit der gewünschten Dämpfung ermöglicht wird. In einer weiteren vorteilhaften Ausprägung wird mindestens eine der Kammern durch einen nicht im Fangkissen befindlichen, aber über einen Kanal oder eine Leitung mit diesem verbundenen Behälter gebildet, in welchem ein Dämpfungselement (bspw. Reibkörper, Fluiddämpfer) für die gewünschte Dämpfungsverhalten des Fangkissens und /oder ein Federelement (bspw. Metallfeder, Gasvolumen) für einen vom momentanen Fangkissenvolumen abhängigen Gegendruck sorgt. Durch das Federelement können dem Kissen neben dämpfenden auch elastische Eigenschaften verliehen werden. Hierdurch erhält die Verbindung zwischen angekoppeltem Flügel und Fangkissen eine Elastizität, die beispielsweise die Kräfte auf die Flügelstruktur reduzieren kann.

In einer weiteren vorteilhaften Ausprägung werden zum gleichen Zweck der Hülle durch Einsatz elastischen Materials und/oder der Füllung bspw. durch Einsatz oder Beimischung von elastischem Füllmaterial elastische Eigenschaften verliehen.

In einer weiteren vorteilhaften Ausprägung wird das Fangkissen unter Überdruck gesetzt, um so die Verformungssteifigkeit zu erhöhen, und damit die Einsinktiefe der eintreffenden Flügelkonstruktion bei gleicher Anprallkraft zu reduzieren.

In einer weiteren vorteilhaften Ausprägung wird das Fangkissen unter Unterdruck gesetzt, um so dessen Plastizität zu erhöhen, und damit den Formschluss zwischen der Flügelkonstruktion und dem Fangkissen zu verbessern.

Vorzugsweise weist die Windkraftanlage einen Mast auf. Der Mast hat ein erstes Ende, welches mit der Bodenstation verbunden ist und ein zweites Ende, mit dem die Seilklinkenbetätigungsvorrichtung verbunden ist. Vorzugsweise ist der Mast teleskopierbar, so dass er während Start und Landung der Flügelkonstruktion ausgefahren und zwischen Start und Landung eingefahren betrieben werden kann.

Vorzugsweise weist der Mast ein Nachführungssystem auf, auf dem die Seilklinkenbetätigungsvorrichtung angeordnet ist. Vorzugsweise verbindet das Nachführungssystem die Seilklinkenbetätigungsvorrichtung um zwei Achsen angetrieben schwenkbar mit dem Mast. Das Merkmal "angetrieben schwenkbar" soll im Sinne der vorliegenden Erfindung insbesondere eine schwenkbare Lagerung umfassen, bei der das gelagerte Bauteil mittels eines Antriebs zwischen verschiedenen Positionen bewegt werden kann. Beispielsweise kann ein erstes Element des Nachführungssystems um die Längsachse des Masts drehbar gelagert sein, wobei das Nachführungssystem einen ersten Antrieb aufweist, der dazu eingerichtet ist, das erste Element relativ zum Mast, um die Längsachse des Masts, zu drehen. Ferner kann ein Ende eines zweiten Elements des Nachführungssystems an dem ersten Element drehbar gelagert sein, beispielsweise um eine Achse, die im rechten Winkel zur Längsachse des Masts steht. Das Nachführungssystem kann einen zweiten Antrieb aufweisen, der dazu eingerichtet ist, das zweite Element relativ zu dem ersten Element auszurichten. Das zweite Element kann an seinem anderen Ende die Seilklinkenbetätigungsvorrichtung aufweisen, so dass bei entsprechender Ansteuerung der Antriebe die Seilklinkenbetätigungsvorrichtung der Bewegung der Halteleine nachgeführt und am Seil ausgerichtet werden kann.

Vorzugsweise umfasst das Nachführungssystem einen oder mehrere Sensoren, wobei jeder Sensor dazu eingerichtet ist, den Abstand der Halteleine vom Sensor und/oder die seitliche Lage der Halteleine vor dem Sensor zu bestimmen. Die Sensoren können ferner dazu eingerichtet sein, die Position eines Schnittpunktes der Halteleine mit einer Referenzebene zu bestimmen. Die Referenzebene kann beispielsweise parallel zu einer Schnittebene durch die Seilklinkenbetätigungsvorrichtung sein, auf der die Längsachse der Seilklinkenbetätigungsvorrichtung lotrecht steht. Die Sensoren können beispielsweise akustische oder optische Sensoren sein, insbesondere Ultraschallsensoren.

Vorzugsweise umfasst das Nachführungssystem eine Steuerungseinrichtung, die dazu eingerichtet ist, auf Basis der Information der Sensoren die Antriebe des Nachführungssystems so zu steuern, dass die Seilklinkenbetätigungsvorrichtung einer Bewegung der Halteleine nachgeführt wird.

Vorzugsweise ist der Mast um mindestens eine, vorzugsweise um zwei Achsen schwenkbar mit der Bodenstation verbunden. Beispielsweise kann ein Ende des Masts drehbar an der Bodenstation gelagert sein, vorzugsweise um die Horizontalachse und die Vertikalachse. Zwei Antriebe können dazu eingerichtet sein, das zweite Ende des Masts auszurichten.

Das erfindungsgemäße System zur Nachführung der Seilklinkenbetätigungsvorrichtung für die flugfähige durch Wind antreibbare Flügelkonstruktion umfasst eine erste, um eine erste Achse angetrieben schwenkbare Einrichtung, und eine auf der ersten schwenkbaren Einrichtung angeordnete zweite Einrichtung. Die zweite Einrichtung ist relativ zur ersten Einrichtung um eine zweite Achse angetrieben schwenkbar, wobei die erste Achse und die zweite Achse nicht identisch sind. Ferner umfasst das erfindungsgemäße System die auf der zweiten Einrichtung angeordnete Seilklinkenbetätigungsvorrichtung, durch die die Halteleine geführt ist. Des Weiteren umfasst das erfindungsgemäße System eine auf der zweiten Einrichtung angeordnete Sensoreinrichtung, die dazu eingerichtet ist, Informationen über eine Position der Halteleine, insbesondere über einen Schnittpunkt der Halteleine mit einer Referenzebene, zu bestimmen. Das erfindungsgemäße System umfasst ferner eine Steuerungseinrichtung, die dazu eingerichtet ist, auf Basis der Informationen der Sensoreinrichtung die Antriebe der ersten und zweiten Einrichtung so zu steuern, dass die Seilklinkenbetätigungsvorrichtung einer Bewegung der Halteleine nachgeführt wird.

Vorzugsweise weist die erste oder die zweite Einrichtung eine Umlenkrolle auf, über die die Halteleine geführt ist. Vorzugsweise umfasst die Sensoreinrichtung einen oder mehrere optische und/oder akustische Sensoren, wie beispielsweise ein Lasermessinstrument, eine Kamera oder Ultraschallsensoren.

Wie oben beschrieben kann das System zur Nachführung einer Seilklinkenbetätigungsvorrichtung für eine flugfähige durch Wind antreibbare Flügelkonstruktion Teil einer Windkraftanlage sein, die eine flugfähige durch Wind antreibbare Flügelkonstruktion mit einer Halteleine aufweist, wobei die Halteleine dazu eingerichtet ist, die Flügelkonstruktion im Betrieb mit einer Bodenstation zu verbinden, und wobei ein Ende der Halteleine an der Flügelkonstruktion befestigt ist.

Wie oben beschrieben weist die Windkraftanlage vorzugsweise eine Bodenstation und einen Mast auf, wobei ein erstes Ende des Masts mit der Bodenstation verbunden ist und das System zur Nachführung der Seilklinkenbetätigungsvorrichtung mit einem zweiten Ende des Masts verbunden ist. Vorzugsweise ist der Mast um mindestens eine Achse angetrieben schwenkbar mit der Bodenstation verbunden. Ferner ist der Mast vorzugsweise ein Teleskopmast, d. h. teleskopierbar.

Wie oben beschrieben ist die Seilklinkenbetätigungsvorrichtung vorzugsweise in eine Fangvorrichtung integriert, durch die die Halteleine geführt ist und die vorzugsweise zumindest eine drehbar gelagerte Fangklinke aufweist. Zudem weist die Flügelkonstruktion vorzugsweise eine Fangeinrichtung mit zumindest einer Aussparung auf und die zumindest eine Fangklinke und die zumindest eine Aussparung sind so ausgeformt, dass, wenn ein Vorsprung der zumindest einen Fangklinke in die zumindest eine Aussparung eingreift, die Flügelkonstruktion an der Fangvorrichtung lösbar befestigt ist.

### KURZBESCHREIBUNG DER FIGUREN

Fig. 1 zeigt eine schematische, beispielhafte Darstellung einer bevorzugten Ausführungsform der Windkraftanlage.
Fig. 2 zeigt eine schematische Querschnittsansicht von Elementen einer bevorzugten Ausführungsform des Systems zur Nachführung der Seilklinkenbetätigungsvorrichtung.
Fig. 3 zeigt eine schematische perspektivische Ansicht von Elementen einer bevorzugten Ausführungsform des Systems zur Nachführung der Seilklinkenbetätigungsvorrichtung.
Figs. 4 bis 6 zeigen schematische Teilschnittansichten des Abkopplungsprozesses der Seilklinke und des Ankopplungsprozesses der Flügelkonstruktion.
Fig. 7 zeigt eine schematische perspektivische Schnittansicht einer bevorzugten Ausführungsform der Seilklinke in einer bevorzugten Ausführungsform der Seilklinkenbetätigungsvorrichtung.
Fig. 8 zeigt eine schematische perspektivische Schnittansicht von Elementen einer bevorzugten Ausführungsform der Fangvorrichtung und der Fangeinrichtung.
Fig. 9 zeigt eine schematische perspektivische Schnittansicht von Elementen einer bevorzugten Ausführungsform der Fangvorrichtung.
Fig. 10 zeigt eine schematische perspektivische Ansicht von Elementen einer bevorzugten Ausführungsform des Systems zur Nachführung der Seilklinkenbetätigungsvorrichtung.
Fig. 11 zeigt eine schematische, perspektivische Ansicht eines Fangsystems.
Figs. 12 und 13 zeigen schematische Querschnittsansichten eines Greifers eines Fangsystems.
Fig. 14 zeigt eine schematische Querschnittsansicht einer bevorzugten Ausführungsform der Fangvorrichtung mit Fangkissen im Zustand vor und nach Eintreffen der Flügelkonstruktion.

### DETAILLIERTE BESCHREIBUNG BEVORZUGTER AUSFÜHRUNGSBEISPIELE

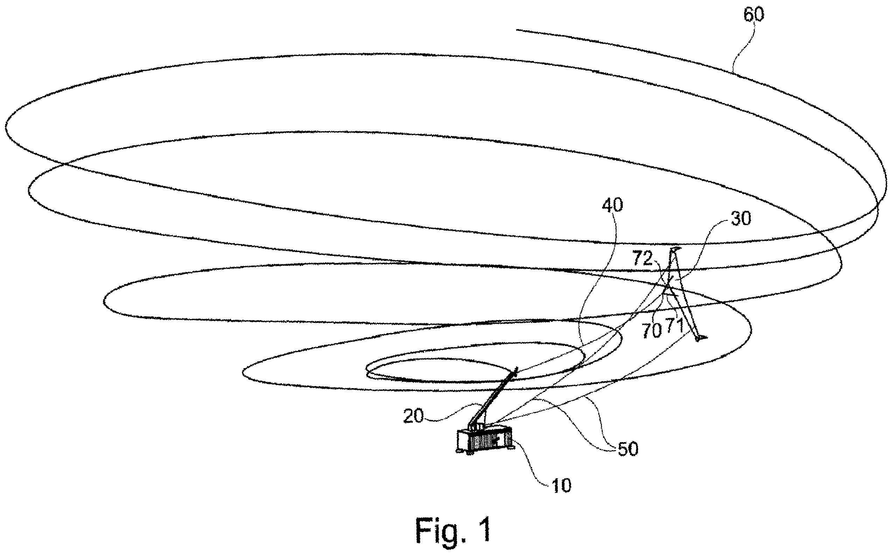

Fig. 1 zeigt eine schematische, beispielhafte Darstellung einer bevorzugten Ausführungsform der Windkraftanlage. Die in Fig. 1 gezeigte Windkraftanlage umfasst eine Bodenstation 10, einen an der Bodenstation angelenkten und drehbar gelagerten Mast 20, eine flugfähige durch Wind antreibbare Flügelkonstruktion 30, eine Halteleine 40, welche die Flügelkonstruktion 30 mit der Bodenstation 10 über den Mast 20 verbindet und zwei Steuerseile 50, die direkt von der Bodenstation 10 zur Flügelkonstruktion 30 geführt und an ihr befestigt sind.

Zu Beginn des Startvorgangs (Start der Flugbahn 60) ist die Flügelkonstruktion 30 am Mast 20 angedockt und der Mast 20 wird um die Hochachse geschwenkt. Sobald die Flügelkonstruktion 30 genügend Auftrieb hat, um stabil zu fliegen, wird sie vom Mast 20 abgedockt. Nach dem Abdocken wird die Rotation des Masts 20 weitergeführt und die Halteleine 40 wird weiter ausgelassen, bis die Waagleinen 71, 72 gespannt sind.

Die gespannten Waagleinen 71, 72 werden mittels einer weiter unten beschriebenen Seilklinkenbetätigungsvorrichtung (in Fig. 1 nicht gezeigt) mit einer Seilklinke 70 auf die Halteleine 40 aufgekoppelt. Wenn die Flügelkonstruktion 30 genug Höhe und Seillänge hat, wird sie in einen Achtenflug gebracht, d. h. die Flugbahn der Flügelkonstruktion 30 beschreibt eine liegende Acht. Ist die Flügelkonstruktion 30 im Achtenflug, wird die Rotation des Masts 20 eingestellt und der Mast 20 in eine feste Winkelanstellung gebracht.

Der Landevorgang findet analog umgekehrt statt. Die Flügelkonstruktion 30 wird mittels der Halteleine 40 eingezogen und schließlich aus dem Achtenflug heraus in eine Flugbahn um die Bodenstation 10 gebracht, wobei der Mast 20 mit der Flügelkonstruktion 30 mitrotiert. Die Halteleine 40 wird während der Rotation des Masts 20 weiter eingezogen. Wenn die Seilklinke 70 an der Seilklinkenbetätigungsvorrichtung angekommen ist, werden die Waagleinen 71, 72 von der Halteleine 40 entkoppelt, so dass die Halteleine 40 ohne Störung durch die Waagleinen 71, 72 weiter eingezogen werden kann.

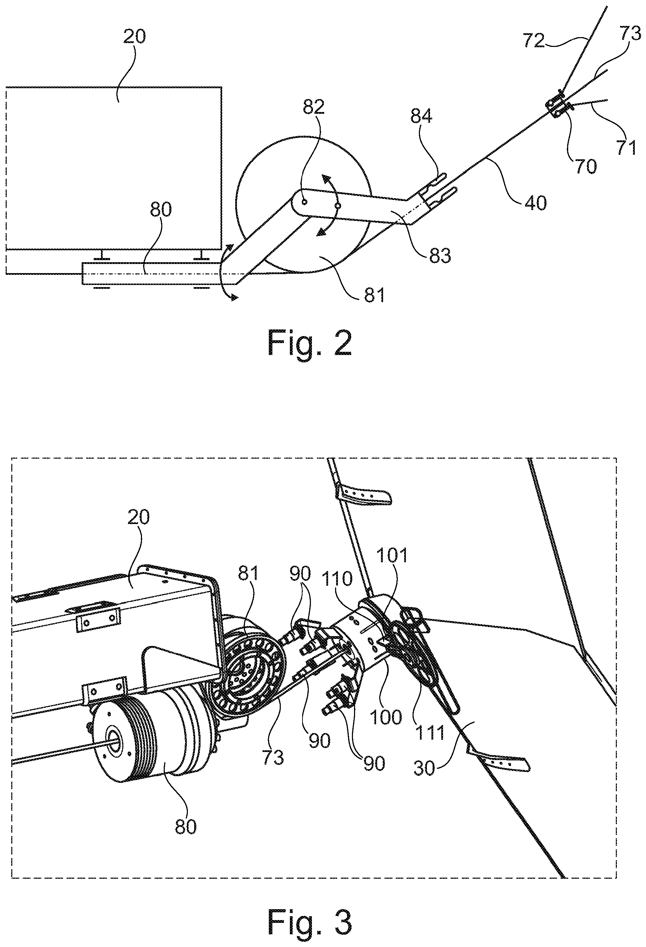

Der Aufbau und die Funktionsweise des Nachführungssystems werden näher unter Bezugnahme auf Fig. 2 erläutert, die eine schematische Querschnittsansicht von Elementen einer bevorzugten Ausführungsform des Systems zur Nachführung der Seilklinkenbetätigungsvorrichtung zeigt. Um Berührungen der laufenden und unter Last stehenden Halteleine 40 mit stehenden Komponenten aus Gründen des Verschleißes zu vermeiden und einen reibungslosen Auf- und Abkopplungsvorgang der Seilklinke 70 zu gewährleisten, kann ein auf dem Mast 20 montiertes Nachführungssystem die Seilklinkenbetätigungsvorrichtung mit den Bewegungen der Halteleine 40 bzw. des Fangseils 73 (Abschnitt der Halteleine zwischen der Seilklinke 70 und der Flügelkonstruktion 30) berührungslos mitführen und die Seilklinkenbetätigungsvorrichtung relativ zur Halteleine 40 ausrichten.

Das Nachführungssystem umfasst einen angetrieben schwenkbaren Hebel 80 mit einem ersten Abschnitt, der parallel zur Längsachse des Masts 20 angeordnet ist. Wie in Fig. 2 gezeigt, ist der erste Abschnitt des Hebels 80 um seine Längsachse drehbar am Mast 20 gelagert. Die Halteleine 40 ist durch den ersten Abschnitt des Hebels 80 geführt. Der Hebel 80 umfasst ferner einen zweiten Abschnitt, der relativ zum ersten Abschnitt geneigt und um die Längsachse des ersten Abschnitts schwenkbar ist. Der zweite Abschnitt des Hebels 80 weist ein Ende auf, an dem eine Umlenkrolle 81 gelagert ist. Die Umlenkrollendrehachse 82 verläuft durch einen Endbereich des zweiten Abschnitts des ersten Hebels 80 und ist rechtwinklig zur Längsachse des zweiten Abschnitts ausgerichtet.

An dem zweiten Abschnitt des Hebels 80 ist ein weiterer angetrieben schwenkbarer Hebel 83 angelenkt. Der Hebel 83 umfasst einen ersten Abschnitt, der an dem Hebel 80 angelenkt ist, sowie einen zweiten Abschnitt, der relativ zur Längsachse des ersten Abschnitts geneigt ist. Die Halteleine 40 ist durch den zweiten Abschnitt geführt. Am Ende des zweiten Abschnitts, an dem die Halteleine 40 aus dem Hebel 83 heraustritt, ist eine Seilklinkenbetätigungsvorrichtung 84 angeordnet. Wie in Fig. 2 gezeigt, ist die aus dem Hebel 83 heraustretende Halteleine 40 durch die Seilklinkenbetätigungsvorrichtung 84 geführt.

Die Steuerung der Nachführung und Ausrichtung der Seilklinkenbetätigungsvorrichtung 84 wird näher in Zusammenhang mit Fig. 3 erläutert, die eine schematische perspektivische Ansicht von Elementen einer bevorzugten Ausführungsform des Systems zur Nachführung der Seilklinkenbetätigungsvorrichtung zeigt. Das in Fig. 3 gezeigte Nachführungssystem umfasst fünf Sensoren 90, beispielsweise Ultraschallsensoren, die um das Fangseil 73 herum angeordnet sind. Die Sensoren 90 sind in den, in Fig. 2 gezeigten, schwenkbaren Hebel 83 integriert, der in Fig. 3 nicht gezeigt ist, um die Darstellung der Anordnung der Sensoren 90 zu vereinfachen. Die Sensoren 90 sind in Umfangsrichtung in gleichmäßigen Abständen um das Fangseil 73 angeordnet und erzeugen Signale, die indikativ für den Abstand zwischen dem Fangseil 73 und dem jeweiligen Sensor sind. Aus diesen Signalen kann ein Abweichungssignal zwischen einer Ist-Position bzw. Ist-Ausrichtung und einer Soll-Position bzw. Soll-Ausrichtung des Nachführungssystems errechnet werden, das dazu verwendet wird, die Hebel 80, 83 des Nachführungssystems so zu schwenken, dass das Nachführungssystem seine Soll-Position und Soll-Ausrichtung eingenommen wird. In der Soll-Position und Soll-Ausrichtung verläuft die Halteleine 40 mittig durch die Seilklinkenbetätigungsvorrichtung 140.

Fig. 3 zeigt ferner eine Fangvorrichtung mit einem Fangkonus 100, an dem die Flügelkonstruktion 30 angedockt ist. Der Fangkonus 100 weist an einer Seite einen Schlitz 101 auf. Aus dem Schlitz 101 ragt ein Zuträger 110, der eine Umlenkrolle 111 trägt. Im Betrieb sind die Waagleinen 71, 72 (nicht gezeigt) miteinander verbunden und über die Umlenkrolle 111 geführt.

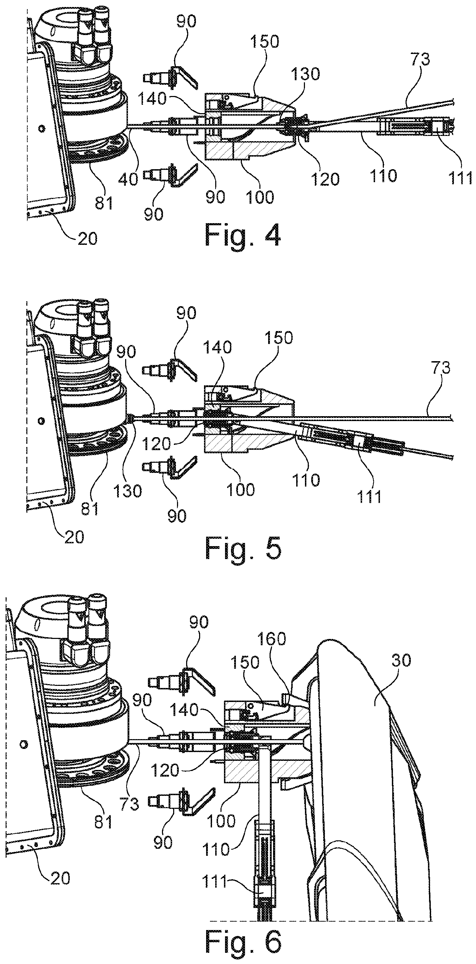

Das Prinzip des Andockvorgangs und die Verwendung des Zuträgers 110 und der Umlenkrolle 111 werden näher im Zusammenhang mit den Figs. 4 bis 6 erläutert, welche schematische Teilschnittansichten des Abkopplungsprozesses der Seilklinke zeigen. Wie in Fig. 4 gezeigt, ist die Umlenkrolle 111 über den Zuträger 110 mit einer Trägerhülse 120 verbunden. Die Trägerhülse 120 ist formschlüssig mit einer Seilhülse 130 verbunden, die in der Trägerhülse 120 angeordnet und auf der Halteleine 40 befestigt ist. Die Trägerhülse 120 umfasst einen Mechanismus zum Ab- und Ankoppeln der Seilhülse 130, der durch eine Seilklinkenbetätigungsvorrichtung 84 (im Folgenden auch Seilklinkendock 140 genannt) betätigt wird. Wird die Trägerhülse 120, wie in Fig. 5 gezeigt, in das Seilklinkendock 140 hereingezogen, koppelt das Seilklinkendock 140 die Seilhülse 130 von der Trägerhülse 120 ab, so dass der Zuträger 110 von der Halteleine 40 entkoppelt ist. In Folge der Entkopplung verlieren die Waagleinen an Spannung und der Zuträger 110 klappt nach unten weg.

Durch weiteres Einziehen des Fangseils wird eine Fangeinrichtung der Flügelkonstruktion 30 auf den Fangkonus 100 gezogen bis eine an dem Fangkonus 100 drehbar gelagerte Fangklinke 150, wie in Fig. 6 gezeigt, in eine Aussparung 160 in der Fangeinrichtung eingreift und die Flügelkonstruktion 30 an der Fangvorrichtung fixiert. Obwohl in den Figs. 4 bis 6 nur eine Fangklinke 150 gezeigt ist, ist es klar, dass mehrere Fangklinken verwendet werden können, wie in Fig. 3 gezeigt.

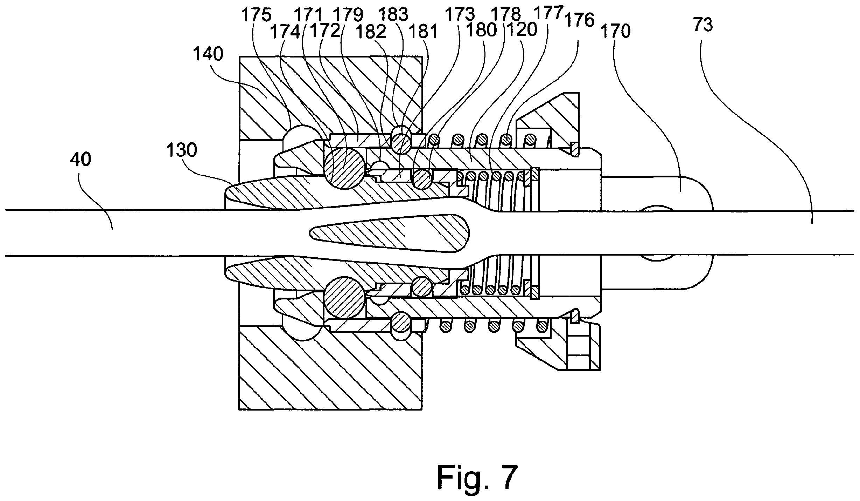

Der Mechanismus zum Ab- und Ankoppeln der Seilhülse 130 wird genauer in Zusammenhang mit Fig. 7 beschrieben, die eine schematische perspektivische Schnittansicht einer bevorzugten Ausführungsform der Seilklinke in einer bevorzugten Ausführungsform des Seilklinkendocks 140 zeigt. Die in Fig. 7 gezeigte Seilklinke besteht aus der Trägerhülse 120 mit einem Anbindungspunkt 170, an den die Waagleinen direkt oder mittels eines oder mehrerer weiterer kraftübertragender Bauteile wie beispielsweise des Zuträgers 110 angebunden sind, sowie einem oder mehreren am Umfang der Trägerhülse 120 verteilten Hauptklemmkörpern 171, beispielsweise Kugeln, die in radialer Richtung verschiebbar in der Trägerhülse 120 gelagert sind. Auf der Trägerhülse 120 axial verschiebbar angebracht ist eine Außenhülse 172, die den radialen Bewegungsspielraum der Hauptklemmkörper 171 je nach axialer Stellung nach außen begrenzt oder freigibt.

Des Weiteren ist in der Trägerhülse 120 eine Innenhülse 173 axial verschiebbar angebracht, die den radialen Bewegungsspielraum der Hauptklemmkörper 171 je nach axialer Stellung nach innen begrenzt oder freigibt.

Der einfache radiale Abstand der begrenzenden Innenfläche der Außenhülse 172 und der begrenzenden Außenfläche der Innenhülse 173 ist kleiner als die radiale Ausdehnung der Hauptklemmkörper 171, also kleiner als beispielsweise der Kugeldurchmesser, so dass sich nicht gleichzeitig die Außen- 172 und die Innenhülse 173 vor den Bewegungsbereich der Hauptklemmkörper 171 schieben können.

Auf die durchgehende Halteleine 40 ist eine Seilhülse 130 in axialer Seilrichtung fest angebracht. Diese ist an der Außenseite mit einer oder mehreren Vertiefungen 174 derart versehen, dass die Hauptklemmkörper 171, wenn sie in einer radialen Position innerhalb der Außenhülse 172 stehen (Stellung A, in Fig. 7 gezeigt), in die Seilhülse 130 eingreifen können und diese dadurch in axialer Richtung am Verlassen der Trägerhülse 120 hindern, sowie den axialen Weg der Seilhülse 130 gegenüber der Trägerhülse 120 freigeben, wenn sie in einer radialen Position außerhalb der Innenhülse 173 stehen (Stellung B, in Fig. 7 nicht gezeigt).

In Stellung A halten die Hauptklemmkörper 171 die Seilhülse 130 mit dem Hauptseil 40 in der Trägerhülse 120 mit den Waagseilen fest. Die Waagleinen sind also auf die Halteleine 40 gekoppelt. Vorteilhafterweise ist die genannte Vertiefung 174 eine umlaufende Nut. Hierdurch wird erreicht, dass die Drehlage der Seilhülse 130 zur Stellung der Hauptklemmkörper 171 am Umfang der Trägerhülse 120 keine Rolle spielt.

Am Punkt, an dem das Abkoppeln geschehen soll, befindet sich das Seilklinkendock 140, das eine Durchgangsöffnung aufweist, die groß genug ist, die Halteleine 40, die Seilhülse 130 und ggf. einen Teil der Trägerhülse 120 hindurch zu lassen, während es jedoch mit der Außenhülse 172 eine form- oder kraftschlüssige Verbindung eingeht, die dafür sorgt, dass die Außenhülse 172 beim Hindurchziehen der Seilklinke aufgeschoben wird. Dadurch wird der radiale Weg der Hauptklemmkörper 171 in der Trägerhülse 120 nach außen frei.

Das Seilklinkendock 140 ist mit einer Vertiefung 175 derart versehen, dass die Hauptklemmkörper 171, wenn sie in einer radialen Position außerhalb der Innenhülse 173 stehen (Stellung B, in Fig. 7 nicht gezeigt), in das Seilklinkendock 140 eingreifen können und die Trägerhülse 120 dadurch in axialer Richtung am Verlassen des Seilklinkendocks 140 hindern, sowie den axialen Weg der Trägerhülse 120 gegenüber dem Seilklinkendock 140 freigeben, wenn sie in einer radialen Position innerhalb der Außenhülse 172 stehen (Stellung A, in Fig. 7 gezeigt). Vorteilhafterweise ist die genannte Vertiefung 175 eine umlaufende Nut. Hierdurch wird erreicht, dass die Drehlage des Seilklinkendocks 140 zur Stellung der Hauptklemmkörper 171 am Umfang der Trägerhülse 120 keine Rolle spielt. In Stellung B halten die Hauptklemmkörper 171 die Trägerhülse 120 mit den Waagseilen im Seilklinkendock 140 fest. Die Waagleinen sind also auf das Seilklinkendock 140 aufgekoppelt. Die Seilhülse 130 hingegen ist gegenüber dem Seilklinkendock 140 und der Trägerhülse 120 axial freigegeben.

Um die Innen- 173 und die Außenhülse 172 jeweils sicher vor dem Bewegungsbereich der Hauptklemmkörper 171 zu halten, sind in vorteilhafter Ausprägung jeweils eine oder mehrere Federn 176 und 177 vorgesehen, die jeweils die Innen- 173 und die Außenhülse 172 vor den Bewegungsbereich der Hauptklemmkörper 171 schieben/ziehen bzw. dort halten.

Sofern die Waagleinen beim Einklinken der Seilklinke in das Seilklinkendock 140 unter Last stehen, besteht die Gefahr, dass die Seilhülse 130 die Trägerhülse 120 verlässt, ohne dass die Innenhülse 173 die axiale Position erreicht hat, die den Bewegungsbereich der Hauptklemmkörper 171 nach innen blockiert. Damit wären die Hauptklemmkörper 171 nicht in Stellung B gezwungen, und damit auch die Trägerhülse 120 nicht im Seilklinkendock 140 arretiert. In diesem Fall ist die Zugkraft der Halteleine 40 von den Waagleinen bereits entkoppelt, so dass die Waagleinen, unterstützt von der Feder 176 an der Außenhülse 172, die verbleibenden Teile der Seilklinke wieder aus dem Seilklinkendock 140 herausziehen können. Um dem zu begegnen sind ein oder mehrere am Umfang der Innenhülse 173 verteilte Nebenklemmkörper 178, beispielsweise Kugeln, vorgesehen, die in radialer Richtung verschiebbar in der Innenhülse 173 gelagert sind. Die radiale Ausdehnung der Nebenklemmkörper 178, also beispielsweise der Kugeldurchmesser, ist größer als die einfache Wanddicke der Innenhülse 173. Der Bewegungsbereich der Nebenklemmkörper 178 ist nach außen durch die Innenseite der Trägerhülse 120 begrenzt. Die Trägerhülse 120 ist an der Innenseite mit einer oder mehreren Vertiefungen 179 derart versehen, dass diese den Bewegungsbereich der Nebenklemmkörper 178 erst in der axialen Position der Innenhülse 173, in der der Bewegungsbereich der Hauptklemmkörper 171 nach innen blockiert ist, nach außen ein gewisses Stück freigeben. Vorteilhafterweise ist die genannte Vertiefung 179 eine umlaufende Nut. Hierdurch wird erreicht, dass die Drehlage der Trägerhülse 120 zur Stellung der Nebenklemmkörper 178 am Umfang der Innenhülse 173 keine Rolle spielt.

Die Seilhülse 130 ist des Weiteren mit einer Vertiefung 180 derart versehen, dass die Nebenklemmkörper 178, wenn sie in einer radialen Position innerhalb der Trägerhülse 120 abseits derer Vertiefung(en) stehen, in die Seilhülse 130 eingreifen können und diese dadurch in axialer Richtung am Verlassen der Innenhülse 173 hindern, sowie den axialen Weg der Seilhülse 130 gegenüber der Innenhülse 173 freigeben, wenn sie in einer radialen Position innerhalb der Vertiefung 179 in der Trägerhülse 120 stehen. Vorteilhafterweise ist die genannte Vertiefung 180 in der Seilhülse 130 eine umlaufende Nut. Hierdurch wird erreicht, dass die Drehlage der Seilhülse 130 zur Stellung der Nebenklemmkörper 178 am Umfang der Innenhülse 173 keine Rolle spielt.

Durch diese Einrichtung wird die Seilhülse 130 so lange am Verlassen der Innenhülse 173 und damit der restlichen Seilklinke gehindert, bis die Innenhülse 173 die axiale Position gegenüber der Trägerhülse 120 erreicht hat, in der sie den Bewegungsbereich der Hauptklemmkörper 171 nach innen begrenzt. Damit erfolgt ein Trennen der Halteleine 40 von den Waagseilen zwangsläufig erst, wenn die Waagleinen am Seilklinkendock 140 befestigt sind.

Sofern die Waagleinen beim Ausklinken der Seilklinke aus dem Seilklinkendock 140 unter Last stehen, besteht die Gefahr, dass die Seilklinke das Seilklinkendock 140 verlässt, ohne dass die Außenhülse 172 die axiale Position erreicht hat, die den Bewegungsbereich der Hauptklemmkörper 171 nach außen blockiert. Damit wären die Hauptklemmkörper 171 nicht in Stellung A gezwungen, und damit auch die Seilhülse 130 nicht in der Trägerhülse 120 arretiert. In diesem Fall kann sich die Seilklinke bereits vom Seilklinkendock 140 entkoppeln, bevor die Halteleine 40 mit den Waagleinen gekoppelt ist, so dass die Waagleinen sich nach Verlassen des Seilklinkendocks 140 wieder von der Halteleine 40 lösen können. Um dem zu begegnen sind ein oder mehrere am Umfang der Außenhülse 172 verteilte Nebenklemmkörper 181, beispielsweise Kugeln, vorgesehen, die in radialer Richtung verschiebbar in der Außenhülse 172 gelagert sind. Die radiale Ausdehnung der Nebenklemmkörper 181, also beispielsweise der Kugeldurchmesser, ist größer als die einfache Wanddicke der Außenhülse 172. Der Bewegungsbereich der Nebenklemmkörper 181 ist nach außen durch die Innenseite des Seilklinkendocks 140 begrenzt. Die Trägerhülse 120 ist an der Außenseite mit einer oder mehreren Vertiefungen 182 derart versehen, dass der Bewegungsbereich der Nebenklemmkörper 181 erst in der axialen Position der Außenhülse 172, in der der Bewegungsbereich der Hauptklemmkörper 171 nach außen blockiert ist, nach innen ein gewisses Stück freigibt. Vorteilhafterweise ist die genannte Vertiefung 182 eine umlaufende Nut. Hierdurch wird erreicht, dass die Drehlage der Trägerhülse 120 zur Stellung der Nebenklemmkörper am Umfang der Außenhülse 172 keine Rolle spielt.

Das Seilklinkendock 140 ist des Weiteren mit einer Vertiefung 183 derart versehen, dass die Nebenklemmkörper 181, wenn sie in einer radialen Position außerhalb der Trägerhülse 120 abseits der Vertiefung(en) 182 stehen, in das Seilklinkendock 140 eingreifen können und die Außenhülse 172 dadurch in axialer Richtung am Verlassen des Seilklinkendock 140 hindern, sowie den axialen Weg der Außenhülse 172 gegenüber dem Seilklinkendock 140 freigeben, wenn sie in einer radialen Position innerhalb der Vertiefung 182 in der Trägerhülse 120 stehen. Vorteilhafterweise ist die genannte Vertiefung 183 im Seilklinkendock 140 eine umlaufende Nut. Hierdurch wird erreicht, dass die Drehlage des Seilklinkendocks 140 zur Stellung der Nebenklemmkörper am Umfang der Außenhülse 172 keine Rolle spielt.

Durch diese Einrichtung wird die Außenhülse 172 und damit die restliche Seilklinke so lange am Verlassen des Seilklinkendocks 140 gehindert, bis die Außenhülse 172 die axiale Position gegenüber der Trägerhülse 120 erreicht hat, in der sie den Bewegungsbereich der Hauptklemmkörper 171 nach außen begrenzt. Damit erfolgt ein Trennen der Waagleinen vom Seilklinkendock 140 zwangsläufig erst, wenn die Halteleine 40 an den Waagleinen befestigt ist.

Da beim Abdocken der Flügelkonstruktion 30 ab dem Moment, in dem die Waagleinen Flügelkräfte übernehmen, gleichzeitig die Kräfte im Fangseil 73 nachlassen, besteht das Problem, dass die Seilhülse 130 möglicherweise nicht weiter in die Seilklinke gezogen wird und stattdessen die Waagleinen die Kräfte in das Seilklinkendock 140 einleiten. Um dem zu begegnen, wäre es möglich, durch Anbringen des Fangseils 73 auf der Verbindungslinie zwischen der linken und der rechten Waagleine dafür zu sorgen, dass unabhängig vom momentanen Anstellwinkel der Flügelkonstruktion 30 die Waagleinen und das Fangseil 73 gleichzeitig unter Spannung bleiben. Dies kann jedoch abhängig von der Flügelbauweise und -form unmöglich sein, wenn beispielsweise die Verbindungslinie zwischen der linken und der rechten Waagleine in der Mitte der Flügelkonstruktion 30 nicht in hinreichend starker Struktur liegt. Eine weitere Lösung wäre, die Flügelkonstruktion 30 im Moment des Abdockens der Seilklinke in einen Anstellwinkel zu bringen, der das Fangseil 73 unter Spannung hält. Jedoch ist bei Flügelkonstruktionen 30 mit Waaganleinung die Flügelstruktur nicht stark genug, um die vollen Lasten allein über das zentrale Fangseil 73 abtragen zu können. Daher muss unter großen Lasten, also im Erzeugungsbetrieb, verhindert werden, dass die Lasten im Fangseil 73 einen bestimmten Anteil an den Gesamtseillasten überschreiten. Das führt dazu, dass in jedem im Betrieb genutzten Anstellwinkel der Flügelkonstruktion 30 das Fangseil 73 weitgehend lastfrei sein muss, während es bei dieser Problemlösung im Moment des Abdockens der Seilklinke Last bekommen soll. Es müsste bei dieser Lösung also in diesem Moment ein Anstellwinkel außerhalb aller Betriebsanstellwinkel eingenommen werden, was während des kritischen Startvorgangs zu Instabilitäten oder Steuerverlust führen kann.

Um dies zu umgehen, kann das Fangseil 73 oder ein Teil dessen elastisch sein. Die elastische Rückstellkraft ist so klein zu wählen, dass sie bei beliebigen im Betrieb genutzten Anstellwinkeln der Flügelkonstruktion 30, also Fangseildehnungen, keine unzulässig großen Lasten in den Knotenpunkt des Fangseils 73 an der Flügelkonstruktion 30 einleitet, also keinen unzulässig großen Lastanteil von den Waagleinen abnimmt und über das Fangseil 73 leitet, aber hinreichend groß, dass sie im Abdockvorgang unter allen dabei vorkommenden Anstellwinkeln und entsprechenden Fangseildehnungen, die Seilhülse 130 zuverlässig in die Seilklinke zu ziehen und die Innenhülse 173 der Seilklinke gegen ihre Federkraft in die Position zu bringen vermag, die den Bewegungsbereich der Hauptklemmkörper 171 nach innen freigibt. Diese Kraft sei im Folgenden Kraft S genannt.

In vorteilhafter Ausprägung wird die Elastizität des Fangseils 73 oberhalb einer gewissen Fangseillast blockiert. Dieses Lastniveau liegt oberhalb der Kraft S, aber unterhalb der Lasten, die die Flügelkonstruktion 30 während des gesamten Start- oder Landevorgangs auf das Fangseil 73 ausübt. Auf diese Weise wird die Flügelkonstruktion 30 während des Start-/Landevorgangs nicht an einem elastischen Fangseil 73 (von der natürlichen, Seilen innewohnenden geringen Elastizität abgesehen) betrieben, was zu unerwünschten Schwingungen und zu Verlust der Steuerbarkeit führen könnte. Die Elastizität wirkt auf diese Weise beim Start erst, wenn genügend Lasten vom Fangseil 73 auf die relativ unelastischen Waagleinen übergegangen sind, bzw. bei der Landung nur so lange, bis genügend Lasten von der Waaganleinung auf das Fangseil 73 übergegangen sind. Die Blockierung sollte erst bei einer solchen Längendehnung des Fangseils 73 auftreten, dass im gesamten, im Betrieb genutzten Bereich der Anstellwinkel der Flügelkonstruktion 30 die Blockierung des Fangseils 73 nicht eintritt.

In vorteilhafter Ausprägung wird die Elastizität durch ein oder mehrere in das Fangseil 73 eingelegte oder parallel zum Fangseil 73 an diesem angebrachte Gummiseile oder anderer elastischer Elemente erreicht, die im ungespannten Zustand kürzer sind, als ihr Anbindungsbereich im Fangseil 73. Als Blockierung der Elastizität kann das Fangseil 73 selbst dienen, wenn der Bereich mit dem eingelegten/angebrachten elastischen Element durch die Verlängerung dessen selbst gespannt wird.

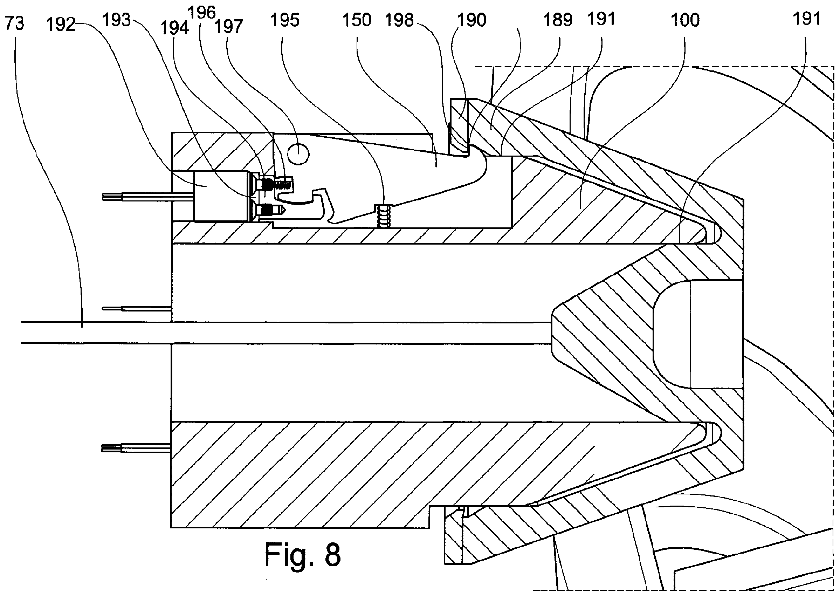

Fig. 8 zeigt eine schematische perspektivische Schnittansicht von Elementen einer bevorzugten Ausführungsform der Fangvorrichtung und der Fangeinrichtung. In Richtung der Flügelkonstruktion 30 ist die Fangvorrichtung zu einem Fangkonus 100 kegelfömig ausgeformt. Die Flügelkonstruktion 30 weist eine Fangeinrichtung auf, die einen Fangtrichter 189 und einen Fangring 190 umfasst. Letztere bilden eine umlaufende Aussparung 160, in die ein Vorsprung der Fangklinke 150 eingreift. Der Fangkonus 100 einerseits und der Fangtrichter 189 und der Fangring 190 andererseits verfügen neben den konischen Flächen auch über zylindrische Flächen 191, die ein axiales Verschieben der Flügelkonstruktion 30 auf dem Fangkonus 100 ermöglichen, ohne das Spiel zu erhöhen oder zu verringern, bzw. ohne die Aufnahmefähigkeit des Systems von Momenten um Achsen quer zur Hauptachse des Fangkonus 100 zu vermindern.

Darüber hinaus können zwischen den konischen, den zylindrischen oder den Stirnflächen des Fangkonus 100 einerseits und des Fangtrichters 189 und Fangrings 190 andererseits feste oder im Andruck einstellbare Reibflächen und/oder elastische Elemente vorgesehen werden, die für eine feste oder einstellbare Drehdämpfung/-elastizität der Flügelkonstruktion 30 gegenüber dem Fangkonus 100 sorgen. Alternativ oder zusätzlich kann durch eine in Rotationsrichtung um die Hauptachse des Systems form- oder kraftschlüssige Verbindung zwischen Fangkonus 100 einerseits und Fangtrichter 189 und Fangring 190 andererseits eine rotationsfeste Kopplung der Flügelkonstruktion 30 an der Fangvorrichtung vorgesehen sein. Dies erlaubt eine Drehdämpfung, -elastizität oder einen Drehantrieb der Flügelkonstruktion 30 im angekoppelten Zustand durch Drehdämpfung, -elastizität oder -antrieb des Fangkonus 100 gegenüber der Bodenstation.

Ebenso kann im angedockten Zustand ein angetriebenes, gedämpftes oder elastisches Element in den Fangtrichter 189 und den Fangring 190 oder andere mit der Flügelkonstruktion 30 verbundene Teile unmittelbar oder mittelbar über kraftübertragende Bauteile eingreifen, um Drehdämpfung, -elastizität oder -antrieb der Flügelkonstruktion 30 im angedockten Zustand zu ermöglichen.

Das Fangseil 73 führt durch den Fangkonus 100 hindurch und ist im Fangtrichter 189 befestigt. Um den Fangkonus 100 herum sind kreisförmig eine oder mehrere Klinkenmechanismen angeordnet, jeweils umfassend eine Fangklinke 150, einen Haltemagneten 192, eine Anzugsplatte 193, einen Anzugsplattenhebel 194, eine Hauptrückstellfeder 195 und eine Anzugsplattenrückstellfeder 196.

Die Fangklinke 150 ist am Punkt 197 drehbar gelagert. Darüber hinaus ist sie selbsthaltend geformt, d.h. Kräfte, die die Flügelkonstruktion 30 in Löserichtung aufbringt, werden gewandelt in ein Moment um die Klinkenlagerachse in Schließrichtung, also nach außen. Zu diesem Zweck ist die wirksame Fläche der Fangklinke 150 so gewinkelt, dass die resultierende Kraft aus Normal- und Tangentialkraft (aus Reibung) von jedem beliebigen Punkt der Fläche auf den Klinkenlagerpunkt 197 oder innen an ihm vorbei zeigt. In vorteilhafter Ausprägung, insbesondere wenn Reibungskräfte unbekannt sind, ist die Klinkenfläche so gewinkelt, dass bereits die einfache Normalkraft von jedem beliebigen Punkt der Fläche auf den Klinkenlagerpunkt 197 oder innen an ihm vorbei zeigt.

Anstatt beim Ausklinkvorgang die Fangklinke 150 mit einem lokal angebrachten Aktuator (beispielsweise Hubmagnet) gegen das große schließende Moment aufzudrücken, ist sie und die vom Fangtrichter 189 und Fangring 190 gebildete Aussparung 160 so geformt, dass zunächst durch weiteres Heranziehen der Flügelkonstruktion 30 mittels des Fangseils 73 die Fangklinke 150 aufgedrückt, also im Fangkonus 100 radial nach innen gedrückt wird. In dieser Stellung kann sie von dem Haltemagneten 192 gehalten werden, bis die Flügelkonstruktion 30 den Eingriffsbereich der Fangklinke 150 verlassen hat. Nach Abschalten des Haltemagnets 192 kehrt die Fangklinke 150 durch die Hauptrückstellfeder 195 wieder in ihre Ausgangslage zurück.

Damit der Haltemagnet 192 den Bewegungsbereich der Fangklinke 150 nach innen nicht vorzeitig begrenzt, bzw. der Haltemagnet 192 bereits voll wirksam wird (also von seiner Anzugsplatte 193 berührt wird), bevor die Fangklinke 150 die innere Grenze ihres vorgesehenen Bewegungsbereiches erreicht, ist ein mit der Anzugsplatte 193 verbundener Anzugsplattenhebel 194 vorgesehen, der die Haltekraft des Magneten auf die Fangklinke 150 überträgt, jedoch ein weiteres Aufdrücken der Fangklinke 150 (im Fangkonus radial nach innen) gegen die Hauptrückstellfeder 195 und zusätzlich gegen die Anzugsplattenrückstellfeder 196 zulässt. Hierdurch ist die Grenze der Bewegung, die die Fangklinke 150 durch weiteres Heranziehen des Fangtrichters 189 vollführen kann, unabhängig von dem Punkt, an dem die Anzugsplatte 193 den Haltemagneten 192 genau erreicht. Das ist wichtig, weil ein genaues Positionieren der Fangklinke 150 durch die Flügelkonstruktion 30 mit ihrem Fangring 190 äußerst schwierig ist und sowohl geringe Fertigungs- als auch geringe Steuertoleranzen erfordern würde. Durch die oben beschriebene Lösung kann die Flügelkonstruktion 30 bis zum Anschlag herangezogen werden, jedoch ist bereits vor diesem Punkt der Haltemagnet 192 von der Anzugsplatte 193 berührt und damit vollständig wirksam und dadurch ein sicheres Offenhalten der Fangklinke 150 beim Abkoppelvorgang gewährleistet. Weder besteht das Risiko, dass der Haltemagnet 192 von der Anzugsplatte 193 nicht ganz erreicht wird und dadurch nur einen Bruchteil seiner Haltekraft aufbringen kann, noch das Risiko, dass die Fangklinke 150 in ihrer Bewegung durch den Haltemagneten 192 gestoppt wird, bzw. die Fangklinke 150 oder der Haltemagnet 192 unzulässig stark belastet werden.

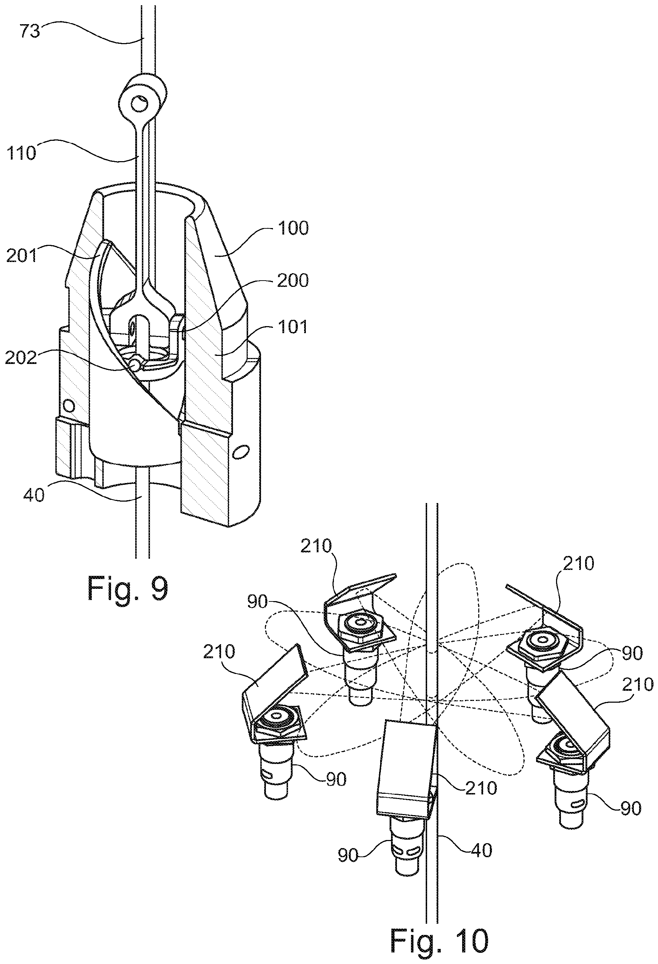

Fig. 9 zeigt eine schematische perspektivische Schnittansicht von Elementen einer bevorzugten Ausführungsform der Fangvorrichtung. Da die Waagleinen an der Flügelkonstruktion 30 nicht innerhalb des Fangtrichters 189 angebunden sind, sind diese, wie oben beschrieben, nicht direkt auf der Trägerhülse 120 befestigt, sondern über einen schmalen Zugträger 110 und ein schwenkbares einachsiges Gelenk 200, dessen Schwenklagerpunkt vor dem Andockvorgang der Flügelkonstruktion 30 innerhalb des Fangkonus 100 zu liegen kommt. Sobald die Waagleinen und damit das Gelenk 200 kraftlos werden, kann der Zugträger 110 mitsamt der Waagleinen durch den radialen Schlitz 101 im Fangkonus 100 zur Seite klappen.

Damit Zugträger 110 und Schlitz 101 gegenüber zu liegen kommen, muss die Drehlage des Gelenkes 200 zum Fangkonus 100 korrekt definiert sein. Dazu sind zwei spiralförmig verlaufende Kanten 201 innerhalb des Fangkonus 100, sowie am Gelenk 200 eine an der Kante entlang gleitende Nocke 202 vorgesehen, die während des Eintauchens in den Fangkonus 100 das Gelenk 200 in die richtige Position dreht. Um ein sicheres Herausklappen des Zugträgers 110 aus dem Fangkonus 100 zu erreichen, kann das Gelenk 200 federbelastet sein. Vorteilhafterweise geschieht dies derart, dass die Federkräfte so klein sind, dass der Zugträger 110 unter den im Betrieb auftretenden Lasten in den Waagleinen nicht aus der Seilachse herausklappt. Dadurch werden im Gelenk 200 Aus-/Einklappschwingungen durch verschiedene Seillastniveaus vermieden. Alternativ oder zusätzlich kann das Fangseil 73 derart durch das Gelenk 200 geführt werden, dass es dieses, sobald es unter Spannung steht und die Spannungen in den Waagleinen hinreichend klein sind, zumindest ein Stück weit umzuklappen vermag.

Fig. 10 zeigt eine schematische perspektivische Ansicht von Elementen des Systems zur Nachführung der Seilklinkenbetätigungsvorrichtung. Die in Fig. 10 gezeigte Messeinrichtung umfasst fünf Ultraschallsensoren 90, die jeweils ihren Abstand zur Halteleine 40 messen. Aus diesen Signalen kann die Position der Halteleine 40 innerhalb des durch die Sensoren 90 begrenzten Bereichs bestimmt werden. Daraus kann zusammen mit den Gebern der beiden Antriebe des Nachführungssystems der Seilwinkel zum Mast berührungslos gemessen werden. Ferner kann diese Messung zur Lageregelung des Nachführungssystems verwendet werden. Die räumlichen Messbereiche der Sensoren 90 sind gestrichelt dargestellt und können durch Ausrichtung des an jedem Sensor 90 vorgesehenen Reflektors 210 eingestellt werden. Statt Ultraschall können auch andere Messmethoden verwendet werden. Diese können den Abstand der Halteleine 40 von einem Sensor 90 oder seine links-rechts-Lage vor einem Sensor 90 messen, beziehungsweise beides, wie beispielsweise eine Laserzeile oder eine Kamera. Alternativ kann eine mechanische, nicht berührungslose Abtastung eingesetzt werden, beispielsweise durch mehrere linear verschiebbare oder kippbare Hebel, die mit oder ohne Rolle auf der Halteleine 40 laufen.

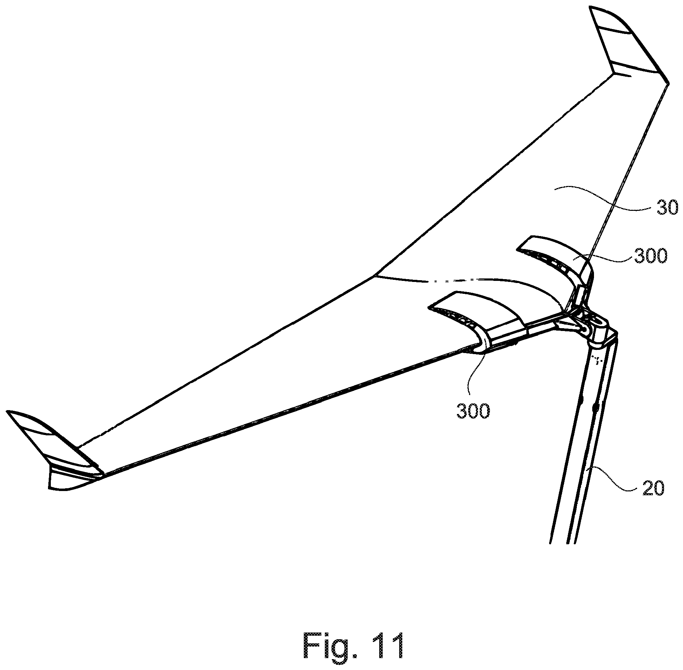

Fig. 11 zeigt eine schematische, perspektivische Ansicht eines Fangsystems, welches mit dem Mast 20 verbunden ist und zwei Greifer 300, aufweist, die dazu eingerichtet sind, die Flügelkonstruktion 30 zu halten.

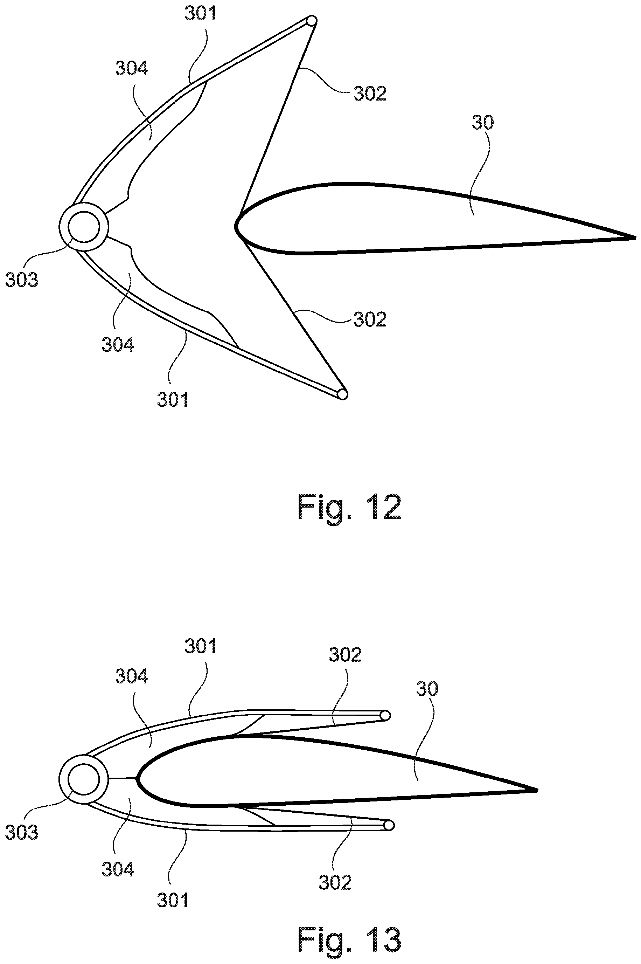

Figs. 12 und 13 zeigen schematische Querschnittsansichten eines Greifers 300 des Fangsystems. Der Greifer 300 umfasst ein Gelenk 303, Schenkel 301, welche die flexiblen Elemente 304 umfassen, und einen Fanggurt 302. Wie in Figs. 12 und 13 gezeigt, ist der Greifer 300 dazu eingerichtet, eine eintreffende Flügelkonstruktion 30 zu fangen und zu halten. Wie in Figs. 12 und 13 gezeigt, werden durch die eintreffende Flügelkonstruktion 30 die Fanggurte 302 gespannt, wodurch sie die Schenkel 301 aufeinander zugezogen werden und sich um die Flügelkonstruktion 30 legen und diese somit fangen. Im geschlossenen Zustand, wie in Fig. 13 gezeigt, umschließen die Schenkel 301 zu einem Teil die Silhouette der Flügelkonstruktion 30 wodurch die Flügelkonstruktion 30 von dem Greifer 301 gehalten wird. Die Elemente 304 weisen eine flügelkonturnahe Form auf, wodurch sie eng an der Flügelkonstruktion 30 anliegen. Darüber hinaus oder alternativ können sie aus einem elastischen und/oder rutschhemmenden Material bestehen oder mit einem solchen flügelseitig beschichtet sein. Die Schenkel 301 und die Elemente 304 können einstückig ausgebildet sein.

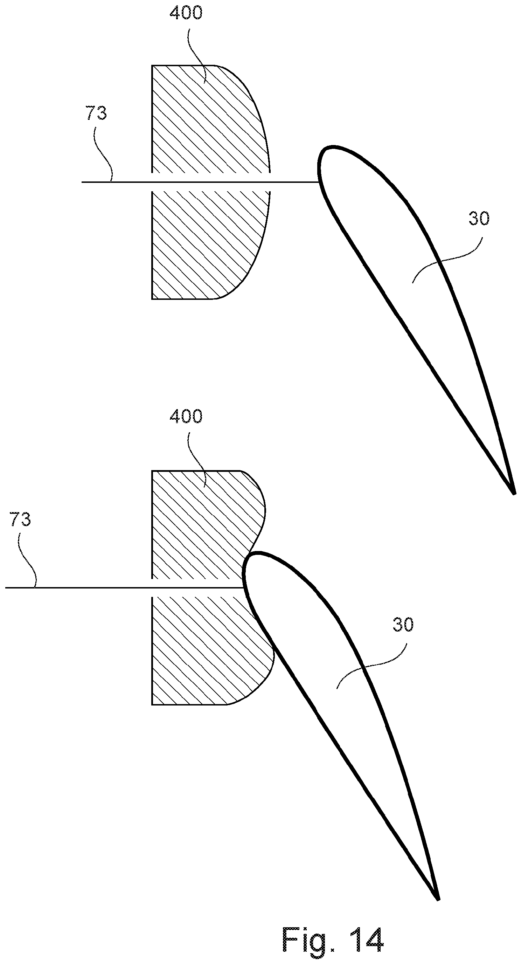

Fig. 14 zeigt eine schematische Querschnittsansicht einer Ausführungsform der Fangvorrichtung mit Fangkissen 400 im Zustand vor (oben) und nach (unten) Eintreffen der Flügelkonstruktion. Die Flügelkonstruktion ist mit der Halteleine 40 an die Bodenstation 10 (Fig. 1) gekoppelt und wird durch diese in die Fangvorrichtung 400 gezogen, welche sich aufgrund der fließfähigen Füllung und der flexiblen Hülle verformt.

## Patentansprüche

1. Flugfähige durch Wind anzutreibende Flügelkonstruktion, umfassend
(i) eine Halteleine, welche dazu eingerichtet ist, die Flügelkonstruktion (30) im Betrieb mit einer Bodenstation (10) einer Windkraftanlage zu verbinden, wobei ein Ende der Halteleine (40) an der Flügelkonstruktion befestigt ist; und
(ii) ein Waagleinensystem, welches eine Vielzahl an Waagleinen (70, 71) umfasst, wobei zumindest zwei Waagleinen ein Ende aufweisen, welches mit der Flügelkonstruktion verbunden ist und zumindest eine Waagleine ein Ende aufweist, welches mit der Halteleine (40) verbunden ist, und das Waagleinensystem im Betrieb lösbar mit der Halteleine verbunden ist,
**dadurch gekennzeichnet, dass** die Halteleine (40) eine an der Halteleine befestigte erste Hülse (130) aufweist, das Waagleinensystem eine zweite Hülse (120) aufweist, mit der die zumindest eine Waagleine (70, 71) verbunden ist, und die Halteleine im Betrieb durch die zweite Hülse geführt ist, wobei die erste und die zweite Hülse dazu eingerichtet sind, im Betrieb eine lösbare form- oder kraftschlüssige Verbindung einzugehen.

2. Flügelkonstruktion nach Anspruch 1, **dadurch gekennzeichnet, dass** die zweite Hülse (120) zumindest einen Klemmkörper (171, 181) aufweist, welcher in einer ersten Position in eine Aussparung in der ersten Hülse (130) eingreift, und eine lösbare Verriegelung umfasst, welche dazu eingerichtet ist, in einem ersten Zustand den zumindest einen Klemmkörper (170, 181) in der ersten Position zu fixieren und in einem weiten Zustand die Bewegung des zumindest einen Klemmkörpers in eine zweite Position zu ermöglichen, in welcher der zumindest eine Klemmkörper in die Aussparung der ersten Hülse (130) nicht eingreift.

3. Windkraftanlage, umfassend eine flugfähige durch Wind anzutreibende Flügelkonstruktion (30) und eine Bodenstation (10), die durch eine Halteleine (40) mit der Flügelkonstruktion verbunden ist, **dadurch gekennzeichnet, dass** sie eine Flügelkonstruktion nach Anspruch 1 oder 2 aufweist.

4. Windkraftanlage nach Anspruch 3, **dadurch gekennzeichnet, dass** sie eine Seilklinkenbetätigungsvorrichtung (84) aufweist, durch die im Betrieb die Halteleine (40) geführt ist, und welche dazu eingerichtet ist, die Verriegelung der zweiten Hülse zu lösen, wenn die zweite Hülse eine vorbestimmte Position relativ zur Seilklinkenbetätigungsvorrichtung einnimmt.

5. Windkraftanlage nach Anspruch 4, **dadurch gekennzeichnet, dass** die zweite Hülse (120) zumindest einen Klemmkörper (171, 178, 181), welcher in der ersten Position in eine Aussparung in der ersten Hülse (130) eingreift, und ein lösbares Verriegelungselement umfasst, welches in einem ersten Zustand den zumindest einen Klemmkörper (171, 178, 181) in einer ersten Position fixiert und beim Hereinziehen der zweiten Hülse in die Seilklinkenbetätigungsvorrichtung (84) von einer ersten Lage in eine zweite Lage bewegt wird, wodurch die Bewegung des zumindest einen Klemmkörpers in die zweite Position ermöglicht wird.

6. Windkraftanlagenach Anspruch 4 oder 5, **dadurch gekennzeichnet, dass**
(i) die Seilklinkenbetätigungsvorrichtung (84) in eine erste Fangvorrichtung (100, 150, 73) integriert ist, die zumindest eine drehbar gelagerte Fangklinke (150) aufweist, und
(ii) die Flügelkonstruktion (30) eine zweite Fangeinrichtung (189, 190, 160) mit zumindest einer Aussparung (160) aufweist,
wobei die zumindest eine Fangklinke (150) und die zumindest eine Aussparung (160) so ausgeformt sind, dass, wenn ein Vorsprung der zumindest einen Fangklinke (150) in die zumindest eine Aussparung (160) eingreift, die Flügelkonstruktion (30) an der Fangvorrichtung lösbar befestigt ist.

7. Windkraftanlagenach Anspruch 4 oder 5, **dadurch gekennzeichnet, dass** die Seilklinkenbetätigungsvorrichtung (84) in eine Fangvorrichtung (300, 301, 302, 303, 304) integriert ist, die einen oder mehrere Greifer (300), enthält, um die Flügelkonstruktion (30) lösbar an der Fangvorrichtung zu befestigen.

8. Windkraftanlage nach Anspruch 7, **dadurch gekennzeichnet, dass** der eine oder die mehreren Greifer (300) jeweils mindestens zwei an einer Basis eines Greifers angelenkte Schenkel (301) aufweisen, wobei der eine oder die mehreren Greifer jeweils ein oder mehrere rückstellelastische Elemente oder mindestens einen Antrieb aufweisen, um mindestens einen Schenkel (301) mit einem Drehmoment zu beaufschlagen.

9. Windkraftanlage nach einem der Ansprüche 4 bis 8, **dadurch gekennzeichnet, dass** sie einen Mast (20) aufweist mit einem ersten Ende, welches mit der Bodenstation (10) verbunden ist und einem zweiten Ende, mit dem die Seilklinkenbetätigungsvorrichtung (84) verbunden ist.

10. Windkraftanlage nach Anspruch 9, **dadurch gekennzeichnet, dass** der Mast ein um zwei Achsen schwenkbares angetriebenes Nachführungssystem (80, 81, 82, 83) aufweist, an dem die Seilklinkenbetätigungsvorrichtung (84) befestigt ist, wobei das Nachführungssystem (i) einen oder mehrere Sensoren (90) umfasst, die den Abstand der Halteleine (40) vom Sensor und/oder die seitliche Lage der Halteleine vor dem Sensor bestimmen, und (ii) eine Steuerungseinrichtung aufweist, welche auf Basis der Information der Sensoren den Antrieb des Nachführungssystems so steuert, dass die Seilklinkenbetätigungsvorrichtung (84) einer Bewegung der Halteleine (40) nachgeführt wird.

11. Windkraftanlage nach Anspruch 10, **dadurch gekennzeichnet, dass** die Sensoreinrichtung eine Vielzahl von optischen und/oder akustischen Sensoren (90), insbesondere Ultraschallsensoren umfasst.

12. Windkraftanlage nach Anspruch 3 oder 4, **dadurch gekennzeichnet, dass** sie eine Fangvorrichtung (400, 73) für die Flügelkonstruktion (30) in Form eines Kissenelementes (400) mit plastischer Auflagefläche umfasst, welches eine flexible Hülle und eine schütt- oder fließfähige oder elastische Füllung aufweist und durch die eintreffende Flügelkonstruktion (30) in der Weise plastisch verformt wird, dass Flügel und Fangvorrichtung eine lösbare, im Wesentlichen formschlüssige Verbindung eingehen.

## Claims

1. Flight-capable wind-driven wing structure, comprising
(i) a tether line which is designed to connect the wing structure (30), during operation, to a ground station (10) of a wind turbine, one end of the tether line (40) being attached to the wing structure; and
(ii) a bridle line system which comprises a large number of bridle lines (70, 71), at least two bridle lines having an end which is connected to the wing structure and at least one bridle line having an end which is connected to the tether line (40), and the bridle line system is releasably connected to the tether line during operation,
**characterized in that** the tether line (40) has a first sleeve (130) attached to the tether line, the bridle line system has a second sleeve (120) to which the at least one bridle line (70, 71) is connected, and during operation, the tether line is guided through the second sleeve, the first and the second sleeve being designed to enter into a releasable form-fitting or frictional connection during operation.

2. Wing structure according to claim 1, **characterized in that** the second sleeve (120) has at least one clamping body (171, 181) which in a first position engages in a recess in the first sleeve (130) and comprises a releasable lock which is designed in a first state to fix the at least one clamping body (170, 181) in the first position and in a wide state to allow the movement of the at least one clamping body into a second position in which the at least one clamping body does not engage in the recess of the first sleeve (130).

3. Wind power plant, comprising a flight-capable wind-driven wing structure (30) and a ground station (10) which is connected to the wing structure by a tether line (40), **characterized in that** it has a wing structure according to either claim 1 or claim 2.

4. Wind power plant according to claim 3, **characterized in that** it has a cable pawl actuation device (84) through which the tether line (40) is guided during operation and which is designed to release the locking of the second sleeve when the second sleeve is in a predetermined position relative to the cable pawl actuation device.

5. Wind power plant according to claim 4, **characterized in that** the second sleeve (120) comprises at least one clamping body (171, 178, 181) which in the first position engages in a recess in the first sleeve (130), and a releasable locking element which in a first state fixes the at least one clamping body (171, 178, 181) in a first position and is moved from a first position to a second position when the second sleeve is pulled into the cable pawl actuation device (84), as a result of which the movement of the at least one clamping body in the second position is allowed.

6. Wind power plant according to either claim 4 or claim 5, **characterized in that**
(i) the cable pawl actuation device (84) is integrated into a first safety catch device (100, 150, 73) which has at least one rotatably mounted safety catch pawl (150), and
(ii) the wing structure (30) has a second safety catch device (189, 190, 160) having at least one recess (160),
the at least one safety catch pawl (150) and the at least one recess (160) being shaped such that when a projection of the at least one safety catch pawl (150) engages in the at least one recess (160), the wing structure (30) is releasably attached to the safety catch device.

7. Wind power plant according to either claim 4 or claim 5, **characterized in that** the cable pawl actuation device (84) is integrated in a safety catch device (300, 301, 302, 303, 304) which contains one or more grippers (300) in order to releasably attach the wing structure (30) to the safety catch device.

8. Wind power plant according to claim 7, **characterized in that** the one or more grippers (300) each have at least two legs (301) articulated to a base of a gripper, the one or more grippers each having one or more resilient elements or at least one drive in order to apply a torque to at least one leg (301).

9. Wind power plant according to any of claims 4 to 8, **characterized in that** it has a mast (20) having a first end which is connected to the ground station (10) and having a second end to which the cable pawl actuation device (84) is connected.

10. Wind power plant according to claim 9, **characterized in that** the mast has a driven tracking system (80, 81, 82, 83) which can be pivoted about two axes and to which the cable pawl actuation device (84) is attached, the tracking system comprising (i) one or more sensors (90) which determine the distance of the tether line (40) from the sensor and/or the lateral position of the tether line in front of the sensor, and having (ii) a control apparatus which controls the drive of the tracking system on the basis of the information from the sensors such that the cable pawl actuation device (84) is tracked to a movement of the tether line (40).

11. Wind power plant according to claim 10, **characterized in that** the sensor device comprises a large number of optical and/or acoustic sensors (90), in particular ultrasonic sensors.

12. Wind power plant according to either claim 3 or claim 4, **characterized in that** it comprises a safety catch device (400, 73) for the wing structure (30) in the form of a cushion element (400) having a plastic bearing surface, which element has a flexible cover and a pourable or flowable or elastic filling and is plastically deformed by the incoming wing structure (30) such that the wing and the safety catch device enter into a releasable, substantially form-fitting connection.

## Revendications

1. Structure d'aile apte au vol propulsée par le vent, comprenant
(i) une ligne de retenue qui est conçue pour relier la structure d'aile (30) à une station au sol (10) d'une éolienne pendant le fonctionnement, une extrémité de la ligne de retenue (40) étant fixée à la structure d'aile ; et
(ii) un système de suspentes, lequel comprend une pluralité de suspentes (70, 71), au moins deux suspentes présentant une extrémité qui est reliée à la structure d'aile et au moins une suspente présentant une extrémité qui est reliée à la ligne de retenue (40), et le système de suspentes étant relié de manière détachable à la ligne de retenue pendant le fonctionnement,
**caractérisée en ce que** la ligne de retenue (40) présente une première douille (130) fixée à la ligne de retenue, le système de suspentes présente une seconde douille (120) à laquelle est reliée l'au moins une suspente (70, 71), et la ligne de retenue est guidée à travers la seconde douille pendant le fonctionnement, la première et la seconde douilles étant conçues de manière à former un liaison détachable par complémentarité de forme ou à force pendant le fonctionnement.

2. Structure d'aile selon la revendication 1, **caractérisée en ce que** la seconde douille (120) présente au moins un corps de serrage (171, 181), lequel, dans une première position, vient en prise dans un évidement de la première douille (130), et comprend un verrouillage libérable, lequel est conçu de manière à fixer, dans un premier état, l'au moins un corps de serrage (170, 181) dans la première position et permettre, dans un autre état, le déplacement de l'au moins un corps de serrage dans une seconde position, dans laquelle l'au moins un corps de serrage ne vient pas en prise dans l'évidement de la première douille (130).

3. Éolienne, comprenant une structure d'aile apte au vol et propulsée par le vent (30) et une station au sol (10), laquelle est reliée à la structure d'aile par une ligne de retenue (40), **caractérisée en ce qu'**elle présente une structure d'aile selon la revendication 1 ou 2.

4. Éolienne selon la revendication 3, **caractérisée en ce qu'**elle présente un dispositif d'actionnement de ligne à cliquet (84) à travers lequel la ligne de retenue (40) est guidée pendant le fonctionnement, et qui est conçu pout enlever le verrouillage de la seconde douille lorsque la seconde douille occupe une position prédéterminée par rapport au dispositif d'actionnement de ligne à cliquet.

5. Éolienne selon la revendication 4, **caractérisée en ce que** la seconde douille (120) comprend au moins un corps de serrage (171, 178, 181), lequel vient en prise, dans la première position, dans un évidement de la première douille (130), et un élément de verrouillage libérable, lequel fixe, dans un premier état, l'au moins un corps de serrage (171, 178, 181) dans une première position et est déplacé d'un premier emplacement à un second emplacement lorsque la seconde douille est rentrée dans le dispositif d'actionnement de ligne à cliquet (84), moyennant quoi le déplacement de l'au moins un corps de serrage dans la seconde position est permis.

6. Éolienne selon la revendication 4 ou 5, **caractérisée en ce que**
(i) le dispositif d'actionnement de ligne à cliquet (84) est intégré dans un premier dispositif de sécurité (100, 150, 73), lequel présente au moins un cliquet de sécurité (150) monté en rotation, et
(ii) la structure d'aile (30) présente un second dispositif de sécurité (189, 190, 160) comportant au moins un évidement (160),
l'au moins un cliquet de sécurité (150) et l'au moins un évidement (160) étant formés de telle sorte que lorsqu'une saillie de l'au moins un cliquet de sécurité (150) vient en prise dans l'au moins un évidement (160), la structure d'aile (30) est fixée de manière détachable sur le dispositif de sécurité.

7. Éolienne selon la revendication 4 ou 5, **caractérisée en ce que** le dispositif d'actionnement de ligne à cliquet (84) est intégré dans un dispositif de sécurité (300, 301, 302, 303, 304), lequel contient une ou plusieurs pinces (300) destinées à maintenir la structure d'aile (30) de manière détachable sur le dispositif de sécurité.

8. Éolienne selon la revendication 7, **caractérisée en ce que** la ou les pinces (300) présentent chacune au moins deux branches (301) articulées à une base d'une pince, la ou les pinces présentant chacune un ou plusieurs éléments à reprise élastique ou au moins un entraînement pour appliquer un couple à au moins une branche (301).

9. Éolienne selon l'une des revendications 4 à 8, **caractérisée en ce qu'**elle présente un mât (20) comportant une première extrémité, laquelle est reliée à la station au sol (10), et une seconde extrémité à laquelle le dispositif d'actionnement de ligne à cliquet (84) est relié.

10. Éolienne selon la revendication 9, **caractérisée en ce que** le mât présente un système d'asservissement (80, 81, 82, 83) entraîné pouvant pivoter autour de deux axes et auquel est fixé le dispositif d'actionnement de ligne à cliquet (84), le système d'asservissement (i) comprenant un ou plusieurs capteurs (90), lesquels déterminent la distance entre la ligne de retenue (40) et le capteur et/ou la position latérale de la ligne de retenue devant le capteur, et (ii) présentant un dispositif de commande, lequel commande l'entraînement du système d'asservissement sur la base des informations provenant des capteurs, de telle sorte que le dispositif d'actionnement de ligne à cliquet (84) est asservi à un déplacement de la ligne de retenue (40).

11. Éolienne selon la revendication 10, **caractérisée en ce que** le dispositif de capteur comprend une pluralité de capteurs optiques et/ou acoustiques (90), en particulier des capteurs à ultrasons.

12. Éolienne selon la revendication 3 ou 4, **caractérisée en ce qu'**elle comprend un dispositif de sécurité (400, 73) pour la structure d'aile (30) sous la forme d'un élément de coussin (400) comportant une surface d'appui en matière plastique, lequel présente une enveloppe flexible et un remplissage pulvérulent ou coulant ou élastique et est déformé plastiquement par la structure d'aile (30) arrivante, de telle sorte que l'aile et le dispositif de sécurité forment une liaison détachable, sensiblement par complémentarité de forme.
